# EUROPEAN PATENT SPECIFICATION

(11) **EP 2 842 854 B1**
(45) Date of publication and mention of the grant of the patent: **12.05.2021**
(21) Application number: 13425118.0
(22) Date of filing: 28.08.2013
(51) Int. Cl.: B62K 25/04

(54) **Bicycle comprising an electronic suspension system**
Fahrrad mit einem elektronischen Aufhängungssystem
Bicyclette avec un système de suspension électronique

(43) Date of publication of application: 04.03.2015
(73) Proprietor: Fox Factory, Inc., Braselton, GA 30517 (US)
(72) Inventor: Sturaro, Fabio, 40069 Bologna (IT); Musiani, Sandro, 40069 Bologna (IT)
(74) Representative: Casbon, Paul Richard

(56) References cited:
- EP-A2- 2 357 098
- EP-A2- 2 682 333
- DE-A1-102005 025 811
- DE-A1-102009 057 047
- US-A- 6 050 583

## Description

### Field of the art

The present invention relates to a bicycle comprising a main frame and an electronic suspension system.

### Prior State of the Art

Suspension systems are formed by at least one damper unit. A damper unit can be placed for the front wheel of the bicycle for the front suspension, known as fork suspension, or for the rear wheel of the bicycle for the rear suspension, known as shock suspension. The suspension system is capable of regulating the compression and/or the rebound unit of each of the damper units, associated with the front and rear wheel of the bicycle respectively.

In the prior art suspension systems, the sensors used to detect the movements of the bicycle and therefore used to regulate the compression and/ or rebound of the damper units are placed on the fork of the bicycle. When the sensors are placed in the fork the detected movements could be influenced by the acceleration of the steering action, which influences on the regulation of the suspension system. These suspension systems are only used to adjust the front suspension after a bump, but they do not consider other situations in the dynamic of the cycle such as breaking actions, cornering and rolling.

The present invention places an accelerometer sensor in the frame of the bicycle to prevent the problems from the prior art solutions.

EP-A-2 357 098 discloses a system for a vehicle, comprising: a vehicle suspension; a sensor operable to measure an operational characteristic of the vehicle suspension; and a processor in communication with the sensor and operable to suggest an operational setting of the vehicle suspension in response to an input from the sensor corresponding to the operational characteristic.

EP-A-2 682 333, available pursuant to Art. 54(3) EPC, discloses a set of sensors attached to a vehicle to sense vehicle motions and send control signals regarding these sensed vehicle motions to a control system of a vehicle suspension damper. The control system activates a power source of the vehicle suspension damper. The power source delivers a current to an electronic valve. The current causes a pilot valve assembly of the electronic valve to either open or close, thereby creating a "hard" mode having maximum damping force or a "soft" mode that provides a moderate damping force, respectively.

### Summary of the Invention

According to the present invention there is provided a bicycle as set out in independent claim 1. Preferred embodiments of the present invention are laid down in the appended dependent claims 2-14.

Although the system can be used either in a front/fork suspension and in a rear/shock suspension, or in both at the same time, the present description will refer, for simplicity, to the front/fork suspension.

The suspension system regulates the compression of a damper unit, and preferably the damper unit placed in the fork of the bicycle. The regulation of the front/ fork damper unit compression comprises at least three settings. Each of the settings changes electronically to a certain level the stiffness of the compression of the damper unit.

Said regulation of the stiffness of the front fork compression is done electronically by an electric motor. The electric motor is preferably a step motor, integrated inside the front fork of the bicycle. Said motor moves a valve in such a way that varies the flow of the oil inside the compression unit of the front fork.

Said settings can be selected automatically by the system or manually by the rider. Automatic mode is done by an algorithm included on the computer program or software in the electronic unit. Algorithm varies the compression stiffness depending on the riding and track conditions. Manual mode is setup by the rider of the bicycle by pressing a switching button. Selection of Automatic or Manual Mode can be made also by the same button. The selected setting and mode is highlighted by LEDs.

The riding and track conditions are selected depending on the information recorded by at least one sensor. The present system includes at least one accelerometer sensor placed in the frame of the bicycle and additionally includes a pedalling sensor.

The accelerometer sensor is positioned on the bicycle main frame and allocated on a control box. Said accelerometer sensor measures the accelerations in the 3 axis, including transversal accelerations. The accelerometer sensor is placed on the main frame of the bicycle and not on other parts of the bicycle, as for example the front fork or rear damper of the bicycle, because the accelerations recorded are more accurate to characterize the dynamic of the bicycle and therefore braking, cornering and rolling actions can be considered. On the other hand, the system is not influenced by other accelerations that could come from the bending of other elements or by the steering movements.

The pedalling sensor measures the cadence of the rider pedalling and it is located close to the bicycle pedals.

The system is completed by an electric power source which is a battery, preferably rechargeable. Said battery is placed too in the control box. Said battery can be removed from the control box to be recharged, and said charge operation is preferably done via a micro USB connection.

The mentioned control box is used, as described above, to support the battery and the electronic unit with the PCB (Printed Circuit Board) for all the electronic devices, including the accelerometer sensor. The control box is located, as the accelerometer, on the main frame of the bicycle.

As previously stated, the compression stiffness of each of the settings is prefixed initially by the suspension system manufacturer but they can be also modified and fixed by the rider depending on his riding conditions or preferences. Configuration of each of the settings is done using either a computer or with a portable device such as a smartphone that is connected to the electronic unit with PCB in the control box on the bicycle.

The communication between the electronic unit with PCB of the suspension system and the computer or smartphone is done either using a wire connection (interface USB/Micro USB) or via Bluetooth connection. Said changes on the stiffness are done and monitored using a software application for computer or an application for smartphone. Software shows the level of closing or opening of the flow in terms of percentage.

As previously explained the electronic suspension system, controlled by the computer program installed on the PCB in electronic unit of the control box, has to be able to work on the following two modes, automatic or semi-active and manual:

### 1. Automatic or Semi-active Mode:

On automatic or semi-active mode, the computer program chooses automatically the settings depending on sensors information.

There will be three different settings of the fork:
a. Climb: Total blockage of the fork. Level of blockage can be changed via computer program.
b. Platform: Not to lose traction, have a minimum of shock absorption. Level of damping can be changed via computer program.
c. Fast Ride: Not to lose grip. Adapt to terrain without "rebound"/bouncing. Compression could be full opened. Level of damping can be changed via computer program.

The automatic or semi-active mode works as follow:
- Pedalling and no shock: Fork is in 100% LOCK OUT mode
- Pedalling and small shocks: Fork is in PLATFORM mode
- Pedalling and big bumps: Fork is in FULL OPEN mode
- No pedalling: Fork is in FULL OPEN mode

### 2. Manual Mode:

On manual position, fork configuration can be selected manually by the rider between the 3 defined settings.

The present suspension system allows the detection of different accelerations that characterize the dynamic of the cycle. This could not be possible placing the accelerometer in the fork of the bicycle, as the prior art solution do, because the detected accelerations would be influenced by the acceleration of the steering action, which is not interesting for regulating the suspension system.

For example, the present system can detect the transversal acceleration during a cornering while if the accelerometer is placed in the fork, the accelerations due to the steering action could influence the signal in a wrong way.

Further the present system can detect the sinking of the bicycle during the braking action. This is not possible when the accelerometer is placed in the fork.

The fork can have flexural vibrations which make the signal send from the sensor in the fork to have a high level of noise, and this makes difficult the signal processing. Having the accelerometer in the frame such kind of flexural vibrations are prevented.

Another advantage of placing the sensor in the frame instead of placing it in the fork, is that the whole system is more compact, as the sensor, battery and PCB are located in the same place, making the system cheaper and easier to maintain.

### Brief Description of the Drawings

The previous and other advantages and features will be more fully understood from the following detailed description of embodiments, with reference to the attached, which must be considered in an illustrative and non-limiting manner, in which:

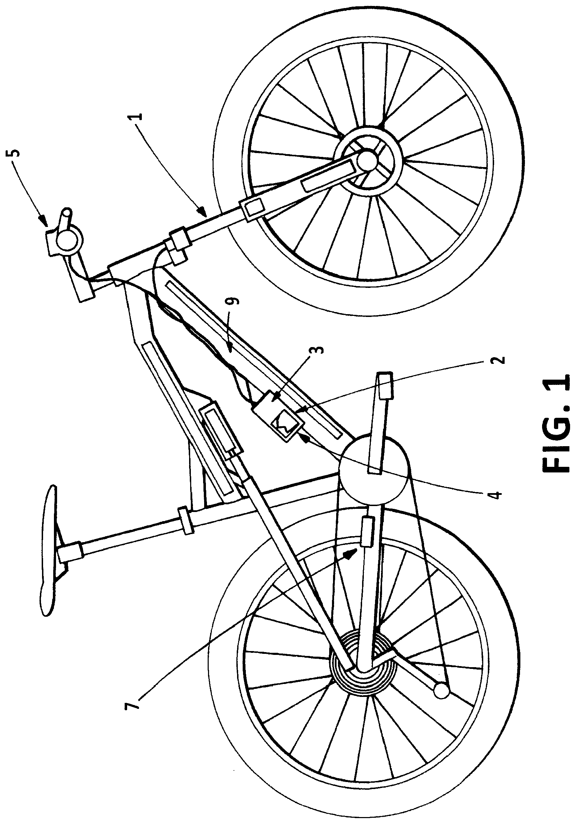

Figure 1 shows a bicycle of the invention including the different components of the suspension system.

### Detailed Description of Several Embodiments

In figure 1, the following components of the electronic suspension system for bicycles, mainly mountain-bike type, can be seen:
- Electronic Fork (1), comprising a damper unit, a cartridge, a step motor assembly comprising a step motor and a planetary drive, and valves.
- Control box (2) placed on the main frame of the bicycle, comprising a main body, a battery housing, an electronic unit support, and outer cover and connectors.
- Battery (3), placed inside the control box (2).
- Electronic unit or electronic Printed Circuit Board (PCB) (4), placed inside the control box (2) and connected to the battery (3), comprising the electronic devices, the accelerometer sensor, the step motors drivers, the Bluetooth module, the computer program, as well as all the required control elements.
- Switch button (5), placed on the handlebar of the bicycle, and comprises a small PCB, a button and LEDs.
- Computer program or software
- Pedalling sensor (7), placed near the pedals of the bicycle and connected, wireless or by wire, with the Electronic unit (4).
- Wiring (9), used mainly to connect the electronic fork (1) with the Electronic PCB (4) and to connect the switch button (5) with the Electronic unit (4). This wiring can also be used to connect the pedalling sensor (7) to the Electronic PCB (4). The wiring can be substituted by wireless devices.

The system can further comprise a PC and mobile device or smartphone application to control the settings of the electronic suspension system.

The electronic fork (1) consists of a damper designed specifically for this invention. The fork includes the components of a conventional fork but updated to allocate components needed to change stiffness of the damper electronically. The compression side of the fork is oversized to include an electronic device that electronically varies the flow of the oil inside the fork. The electronic device selected is an electric step motor used to change the absorption grade of the damper and that comprises the following components integrated in the fork: a step motor and a planetary drive.

The control box (2) is used to allocate mainly the Battery (3) and the electronic unit (4). Control box (2) is made up of a main body that includes the joint device for the main frame and the housing for the electronic unit (4), and the battery housing, which is inserted on the main body and is used to hold the battery to the main body. Preferably, the control box (2) has a level of protection IP65 to avoid leakage of water, dirt and mud inside which could damage the electronic devices. The control box (2) is designed to be located on the main frame of the bicycle. It is preferably fixed on the thread holes used for water bottle. The battery housing is designed to be removed easily from the main box so battery can be charged separately.

The battery (3) is preferably rechargeable. It preferably lasts at least 15000 rotation cycles of 90° of the compression valve (16 hours of function with 1sec movement each 4 sec).

The electronic PCB (4) will integrate the electronic system to manage the functions of the fork. It will specially include the step motor driver, the computer program and the Bluetooth module. The PCB needs to integrate an additional step motor driver to manage a second step motor assembled on the rear shock of the bicycle. The data coming from the accelerometer sensor will be translated in order to choose the setting requested for each riding condition. The Bluetooth module is used for the communication with a smartphone or mobile device and/ or a computer/ PC.

The switch button (5) place on the handlebar or the bicycle is used to change settings when using the bicycle on manual mode and to change too from manual to automatic mode. In order to manage this operation the system will use a different time when the user press the button. Preferably the same button will be used too to switch on/off the system, pressing for different time. This button has two LEDs near to display the function as follows, for example:
- Led 1: used to display Manual or Automatic mode, example red in Manual and blue in Automatic.
- Led 2: used to display in Manual and Automatic mode function the current setting, example red in Climb, blue in Platform and green in Fast ride.

Communication with the main box will preferably be done via wiring although it can also be made wireless.

As previously explained, the computer program or software should be able to work in manual or automatic/ semi-active modes:
On automatic or semi-active mode, the computer program chooses automatically the settings depending on sensors Information.

There will be three different settings of the fork:
d. Climb: Total blockage of the fork. Level of blockage can be changed via computer program.
e. Platform: Not to lose traction, have a minimum of shock absorption. Level of damping can be changed via computer program.
f. Fast Ride: Not to lose grip. Adapt to terrain without "rebound"/bouncing. Compression could be full opened. Level of damping can be changed via computer program.

The automatic or semi-active mode works as follow:
- Pedalling and no shock: Fork is in 100% LOCK OUT mode
- Pedalling and small shocks : Fork is in PLATFORM mode
- Pedalling and big bumps : Fork is in FULL OPEN mode
- No pedalling : Fork is in FULL OPEN mode

On manual position, fork configuration can be selected manually by the rider between the 3 defined settings.

Both modes will include a Fail Safe Mode (Fast Ride) when battery reaches a percentage of it total capacity level. Fail safe mode of the fork will not be able if current supply is suddenly cut.

A pedalling sensor (7) is needed to give data that will be used for the setting selection and it will be located on the frame near the pedal. The communication with the electronic PCB (4) might be via wire or wireless.

The system preferably only comprises two electric wires to connect different components. The first wire connects the compression side of the fork (1) with the control box (2). The second wire connects the switch button (5) to the control box (2). Anyway other wires can be used for other connections if required.

## Claims

1. A bicycle comprising a main frame and an electronic suspension system comprising an accelerometer sensor which is connected at least to a damper unit associated to a wheel of the bicycle, and an electric power source which is a battery (3), said electronic suspension system is adapted to regulate a compression of the damper unit;
**characterised in that** the electronic suspension system further comprises a control box (2) located on said main frame, the battery (3) and the accelerometer sensor are placed inside the control box (2) whereby the accelerometer sensor is also placed on said main frame and not on other parts of the bicycle, as for example a front fork (1) or a rear damper of the bicycle, and
said accelerometer sensor measures accelerations in 3 axes, including transversal accelerations.

2. A bicycle as claimed in claim 1, wherein said damper unit is placed in a front fork (1) of the bicycle.

3. A bicycle as claimed in claim 2, wherein the regulation of the damper unit compression comprises at least three settings, and each of the settings changes electronically to a certain level the stiffness of the compression of the damper unit.

4. A bicycle as claimed in claim 3, wherein the suspension system comprises an electric motor for electronically regulating the stiffness of the damper unit compression.

5. A bicycle as claimed in claim 4, wherein the electric motor is a step motor integrated inside the front fork (1) of the bicycle, the arrangement being such that, in use, said electric motor moves a valve to vary the flow of oil inside a compression unit of the front fork.

6. A bicycle as claimed in any of claims 3 to 5, wherein said settings can be selected automatically by the system or manually by the rider.

7. A bicycle as claimed in claim 6, wherein said suspension system further comprises an electronic unit (4) having a computer program or software comprising an algorithm for said automatic selection, the arrangement being such that, in use, said algorithm varies the compression stiffness depending on the riding and track conditions.

8. A bicycle as claimed in claim 6 or 7, wherein said suspension system comprises a switching button (5), the arrangement being such that, in use, the manual selection is setup by the rider of the bicycle by pressing the switching button (5).

9. A bicycle as claimed in claim 8, wherein a selection of the automatic or manual selection can be made by said switching button (5).

10. A bicycle as claimed in any preceding claim, wherein said battery (3) is a rechargeable battery.

11. A bicycle as claimed in claim 7, wherein said electronic unit (4) comprises a printed circuit board for all electronic devices including the accelerometer sensor, wherein said control box (2) supports the battery (3) and the electronic unit (4).

12. A bicycle as claimed in any preceding claim, wherein said suspension system further comprises a pedalling sensor (7) for measuring the cadence of the rider pedalling, which pedalling sensor (7) is located close to the bicycle pedals.

13. A bicycle as claimed in claim 7, wherein said at least three settings comprises:
(a) a climb setting in which there is a total blockage of said damper unit, a level of blockage is adjustable via said computer program;
(b) a platform setting in which there is a minimum of shock absorption by said damper unit so that the bicycle does not lose traction of the track, a level of damping is adjustable via said computer program;
(c) a fast ride setting in which said damper unit does not rebound or bounce so that the bicycle does not lose grip of the track, a level of damping is adjustable via said computer program.

14. A bicycle as claimed in claim 13, wherein in said fast ride setting the compression of said damper unit is full open.

## Patentansprüche

1. Fahrrad, umfassend einen Hauptrahmen und ein elektronisches Aufhängungssystem, umfassend einen Beschleunigungssensor, der zumindest mit einer einem Rad des Fahrrads zugeordneten Dämpfereinheit verbunden ist, und eine elektrische Energiequelle, die eine Batterie (3) ist, wobei das elektronische Aufhängungssystem geeignet ist, ein Einfedern der Dämpfereinheit zu regeln;
**dadurch gekennzeichnet, dass** das elektronische Aufhängungssystem des Weiteren ein Steuergehäuse (2) umfasst, die an dem Hauptrahmen angeordnet ist, wobei die Batterie (3) und der Beschleunigungssensor im Inneren des Steuergehäuses (2) angeordnet sind, wobei der Beschleunigungssensor auch an dem Hauptrahmen und nicht an anderen Teilen des Fahrrads, wie beispielsweise einer Vordergabel (1) oder einem hinteren Dämpfer des Fahrrads, angeordnet ist, und
der Beschleunigungssensor Beschleunigungen in drei Achsen, einschließlich Querbeschleunigungen, misst.

2. Fahrrad nach Anspruch 1, wobei die Dämpfereinheit in einer Vordergabel (1) des Fahrrads angeordnet ist.

3. Fahrrad nach Anspruch 2, wobei die Regelung der Einfederung der Dämpfereinheit zumindest drei Einstellungen umfasst und jede der Einstellungen die Steifigkeit der Einfederung der Dämpfereinheit elektronisch auf ein bestimmtes Niveau verändert.

4. Fahrrad nach Anspruch 3, wobei das Aufhängungssystem einen Elektromotor zur elektronischen Regelung der Steifigkeit der Einfederung der Dämpfereinheit umfasst.

5. Fahrrad nach Anspruch 4, wobei der Elektromotor ein Schrittmotor ist, der in die Vordergabel (1) des Fahrrads integriert ist, wobei die Anordnung so beschaffen ist, dass der Elektromotor im Gebrauch ein Ventil bewegt, um den Durchfluss von Öl innerhalb einer Einfederungseinheit der Vordergabel zu verändern.

6. Fahrrad nach einem der Ansprüche 3 bis 5, wobei die Einstellungen automatisch durch das System oder manuell durch den Fahrer ausgewählt werden können.

7. Fahrrad nach Anspruch 6, wobei das Aufhängungssystem des Weiteren eine elektronische Einheit (4) umfasst, die ein Computerprogramm oder eine Software aufweist, die einen Algorithmus für die automatische Auswahl umfasst, wobei die Anordnung so beschaffen ist, dass der Algorithmus im Gebrauch die Einfederungssteifigkeit in Abhängigkeit von den Fahr- und Streckenbedingungen variiert.

8. Fahrrad nach Anspruch 6 oder 7, wobei das Aufhängungssystem einen Schaltknopf (5) umfasst, wobei die Anordnung so beschaffen ist, dass im Gebrauch die manuelle Auswahl durch den Fahrer des Fahrrads durch Drücken des Schaltknopfs (5) eingestellt wird.

9. Fahrrad nach Anspruch 8, wobei eine Auswahl der automatischen oder manuellen Auswahl durch die Umschalttaste (5) getroffen werden kann.

10. Fahrrad nach einem der vorangegangenen Ansprüche, wobei die Batterie (3) eine wiederaufladbare Batterie ist.

11. Fahrrad nach Anspruch 7, wobei die elektronische Einheit (4) eine gedruckte Leiterplatte für alle elektronischen Vorrichtungen einschließlich des Beschleunigungssensors umfasst, wobei das Steuergehäuse (2) die Batterie (3) und die elektronische Einheit (4) trägt.

12. Fahrrad nach einem der vorangegangenen Ansprüche, wobei das Aufhängungssystem des Weiteren einen Trittfrequenzsensor (7) zum Messen der Trittfrequenz des Fahrers umfasst, wobei der Trittfrequenzsensor (7) in der Nähe der Fahrradpedale angeordnet ist.

13. Fahrrad nach Anspruch 7, wobei die zumindest drei Einstellungen umfassen:
(a) eine Steig-Einstellung, in der es eine totale Blockierung der Dämpfereinheit gibt, wobei ein Grad der Blockierung über das Computerprogramm einstellbar ist;
(b) eine Ebenen-Einstellung, in der es ein Minimum an Stoßdämpfung durch die Dämpfereinheit gibt, so dass das Fahrrad die Bodenhaftung auf der Strecke nicht verliert, wobei ein Grad der Dämpfung über das Computerprogramm einstellbar ist;
(c) eine Schnellfahrt-Einstellung, in der die Dämpfereinheit nicht zurückfedert oder ausfedert, so dass das Fahrrad die Bodenhaftung auf der Strecke nicht verliert, wobei ein Grad der Dämpfung über das Computerprogramm einstellbar ist.

14. Fahrrad nach Anspruch 13, wobei in der Schnellfahrt-Einstellung die Einfederung der Dämpfereinheit vollständig geöffnet ist.

## Revendications

1. Bicyclette comprenant un cadre principal et un système de suspension électronique comprenant un capteur accéléromètre qui est connecté à au moins une unité d'amortisseur associée à une roue de la bicyclette, et une source d'alimentation électrique qui est une batterie (3), ledit système de suspension électronique est adapté pour réguler une compression de l'unité d'amortisseur ;
**caractérisée en ce que** le système de suspension électronique comprend en outre une boîte de commande (2) située sur ledit cadre principal, la batterie (3) et le capteur accéléromètre sont placés à l'intérieur de la boîte de commande (2) moyennant quoi le capteur accéléromètre est également placé sur ledit cadre principal et non sur d'autres parties de la bicyclette, comme par exemple une fourche avant (1) ou un amortisseur arrière de la bicyclette, et
ledit capteur accéléromètre mesure des accélérations en 3 axes, y compris des accélérations transversales.

2. Bicyclette selon la revendication 1, dans laquelle ladite unité d'amortisseur est placée dans une fourche avant (1) de la bicyclette.

3. Bicyclette selon la revendication 2, dans laquelle la régulateur de la compression d'unité d'amortisseur comprend au moins trois réglages, et chacun des réglages change électroniquement à un certain niveau la raideur de la compression de l'unité d'amortisseur.

4. Bicyclette selon la revendication 3, dans laquelle le système de suspension comprend un moteur électrique pour réguler électroniquement la raideur de la compression d'unité d'amortisseur.

5. Bicyclette selon la revendication 4, dans laquelle le moteur électrique est un moteur pas à pas intégré à l'intérieur de la fourche avant (1) de la bicyclette, l'agencement étant tel que, en utilisation, ledit moteur électrique déplace une soupape pour faire varier le flux d'huile à l'intérieur d'une unité de compression de la fourche avant.

6. Bicyclette selon l'une quelconque des revendications 3 à 5, dans laquelle lesdits réglages peuvent être sélectionnés automatiquement par le système ou manuellement par le cycliste.

7. Bicyclette selon la revendication 6, dans laquelle ledit système de suspension comprend en outre une unité électronique (4) ayant un programme d'ordinateur ou logiciel comprenant un algorithme pour ladite sélection automatique, l'agencement étant tel que, en utilisation, ledit algorithme fait varier la raideur de compression en fonction des conditions de conduite et de piste.

8. Bicyclette selon la revendication 6 ou 7, dans laquelle ledit système de suspension comprend un bouton de permutation (5), l'agencement étant tel que, en utilisation, la sélection manuelle est mise en place par le cycliste de la bicyclette en appuyant sur le bouton de permutation (5).

9. Bicyclette selon la revendication 8, dans laquelle une sélection de la sélection automatique ou manuelle peut être faite par ledit bouton de permutation (5).

10. Bicyclette selon l'une quelconque des revendications précédentes, dans laquelle ladite batterie (3) est une batterie rechargeable.

11. Bicyclette selon la revendication 7, dans laquelle ladite unité électronique (4) comprend une carte de circuit imprimé pour tous les dispositifs électroniques y compris le capteur accéléromètre, dans laquelle ladite boîte de commande (2) supporte la batterie (3) et l'unité électronique (4).

12. Bicyclette selon l'une quelconque des revendications précédentes, dans laquelle ledit système de suspension comprend en outre un capteur de pédalage (7) pour mesurer la cadence de pédalage du cycliste, ledit capteur de pédalage (7) est situé près des pédales de bicyclette.

13. Bicyclette selon la revendication 7, dans laquelle lesdits au moins trois réglages comprennent :
(a) un réglage de montée dans lequel il y a un blocage total de ladite unité d'amortisseur, un niveau de blocage est ajustable via ledit programme d'ordinateur ;
(b) un réglage de plateforme dans lequel il y a un minimum d'absorption de choc par ladite unité d'amortisseur de sorte que la bicyclette ne perde pas de traction de la piste, un niveau d'amortissement est ajustable via ledit programme d'ordinateur ;
(c) un réglage de conduite rapide dans lequel ladite unité d'amortisseur ne rebondit pas ou ne saute pas de sorte que la bicyclette ne perde pas d'adhérence de la piste, un niveau d'amortissement est ajustable via ledit programme d'ordinateur.

14. Bicyclette selon la revendication 13, dans laquelle dans ledit réglage de conduite rapide la compression de ladite unité d'amortisseur est totalement ouverte.
